# EUROPEAN PATENT APPLICATION

(11) **EP 2 057 897 A1**
(43) Date of publication of application: **13.05.2009**
(21) Application number: 07803650.6
(22) Date of filing: 27.07.2007
(51) Int. Cl.: A01K 97/04

(54) **METHOD FOR MANUFACTURING NATURAL BAITS FOR INDUSTRIAL AND SPORTS FISHING**

(30) Priority: 18.08.2006 ES 200602226
(71) Applicant: Juarros Nebreda, Sergio, 09490 Zazuar-Aranda de Duero Burgos (ES); Tomás Puerto, Xenia, 09490 Zazuar-Aranda-de Duero Burgos (ES)
(72) Inventor: Juarros Nebreda, Sergio, 09490 Zazuar-Aranda de Duero Burgos (ES); Tomás Puerto, Xenia, 09490 Zazuar-Aranda-de Duero Burgos (ES)
(74) Representative: Molero Moraleda, Felipe
(86) International application number: PCT/ES2007/000463
(87) International publication number: WO 2008/020097

(57) **Abstract**

The invention consists of the use of gelatins (animal and vegetable protein), fish extracts, hydrocolloids (polysaccharides), pectins, fish flour, fish oil, water and additives, (preservatives, monosaccharide, flavors and colorants), submitted to several mixtures and shakings, carried out at a temperature of over 75°C, and in which different forms are given to the resulting product: cylindrical, by packing it in collagen or cellulose casings, in minted plates and in different forms such as fish, roe, worms, cephalopods, crustaceans, mollusks, etc.

## Description

### Object of the invention

The present invention consists of a method for manufacturing natural bait for industrial and sports fishing, either sea or freshwater, which provides essential characteristics of novelty with respect to the current methods for manufacturing fishing bait known and used in the present State of the Art.

Generally, the method for manufacturing natural bait for industrial and sports fishing object of the present invention, consists of the use of a compound made of natural, non-contaminating products, biodegradable in any environment, for use in any kind of fishing and in different shapes: cylindrical, flexible strips and forms such as fish, roe, worms, cephalopods, crustaceans, mollusks, etc.

Specifically, the method for manufacturing natural bait for industrial and sports fishing object of the present invention, is carried out by means of mixing gelatins, fish extracts, hydrocolloids, pectins, fish flour, fish oil, water and additives, (preservatives, monosaccharide, flavors and colorants), several of the aforementioned shapes are given to the resulting product, depending on the type of fishing to which it will be directed.

### Background of the invention

Natural bait that come from the sea are currently being used in certain industrial fishing, causing the impoverishment of certain fish shoals, thus having a negative effect on bio-sustainability.

The bait currently used for sports fishing, are generally artificial, made of wood, plastic or other materials, therefore they have the disadvantage of polluting the environment since they are not biodegradable.

### Description of the invention

The present invention consists of a method for manufacturing natural bait for industrial and sports fishing made by means of natural ingredients, non-contaminating and biodegradable, shaped in different forms: cylindrical, plates minted in flexible strips, fish, roe, worms, cephalopods, crustaceans, mollusks, etc.

The ingredients that constitute these bait, apart from their own power of attraction and their long duration, can also absorb and retain for a time any kind of appropriate flavor applied to them.

Different forms are given to the bait object of the invention, as specified before.

**Detailed description of the preferred embodiment of the invention**

More specifically the method of manufacturing natural bait for industrial and sports fishing object of the present invention, uses the following ingredients and proportions:

| | |
|---|---|
| Gelatins (animal or vegetable protein) | between 10 and 20% |
| Fish extract | between 60 and 65% |
| Hydrocolloids (Polysaccharides) | between 1,10 and 2,30 % |
| Pectins | between 0,50 and 1 % |
| Fish flour | between 4 and 6% |
| Fish oil | between 2 and 3% |
| Water | between 8 and 12% |
| Additives | between 1 and 2% |

the additives being: preservatives, monosaccharide, flavors and colorants.

The final product is obtained by means of the following operative phases:
1.- The ingredients and solid additives, excluding fish flour are mixed.
   Once the mixture is homogenized it is poured in a mixer pot along with the liquid products, excluding the fish oil.
2.- The mixture is made, raising the temperature at the same time to over 75°C, required temperature to guarantee a correct dissolution and mixture of the products. When the temperature is reached, the fish flour and the fish oil are added, it is shaken during the required time until total homogenization is obtained.
3.- The products are passed indiscriminately, from the pot, to a hopper or an injector machine.
   a) Functionality of the Hopper: By means of two exit devices of the product, with one of them, the product can be introduced in a collagen or cellulose casing giving it a cylindrical form, with different measurement in respect to length and thickness, depending on the use of the bait.
      The casing is clipped and hung at the established length to cool down at room temperature. Also depending on the use of the bait, the casing can be cut in slices once it cools down.
      The collagen or cellulose casings are wrappers to give the cylindrical shape and can be removed before putting the bait on the hook.
      The second device places the product on a conveyor belt, distributing the product over it uniformly and with a previously determined thickness.
      The belt passes the product through a cooling tunnel, achieving a solid and flexible plate. At the end of the belt, a stamping press cuts it into smaller plates and makes a premarking, in order to cut the strips easily that will be used as bait later.
   b) Functionality of the Injector machine: It injects the product into moulds with different shapes: fish, roe, worms, cephalopods, crustaceans, mollusks, etc.
      Once in the moulds, it is left to cool down at room temperature, to remove it from its mould later.
4.- The kind of flavor and color will be applied, depending on the captures the final product is destined to.
   Once the nature of the improvements of the invention has been conveniently described, it is hereby stated to the opportune effects, that the same is not limited to the exact details of this report, but on the contrary, any opportune modifications will be introduced, as long as the essential characteristics of the same are not altered, which characteristics are stated in the following claims:

## Claims

1. Method for manufacturing natural bait for industrial and sports fishing, which is **characterized in** the use of gelatins (animal or vegetal protein), fish extracts, hydrocolloids (polysaccharide), pectins, fish flour, fish oil, water and additives by means of preservatives, monosaccharide, flavors and colorants, in the following proportions:
| | |
|---|---|
| Gelatins (animal or vegetable protein) | between 10 and 20% |
| Fish extract | between 60 and 65% |
| Hydrocolloids (Polysaccharides) | between 1,10 and 2,30 % |
| Pectins | between 0,50 and 1% |
| Fish flour | between 4 and 6% |
| Fish oil | between 2 and 3% |
| Water | between 8 and 12% |
| Additives | between 1 and 2% |
the additives being: preservatives, monosaccharide, flavors and colorants, whose ingredients are submitted to the following operative phases:
a) The ingredients and solid additives are mixed, except for the fish flour. Once the mixture is homogenized, this is poured into a mixer pot along with the liquid products, except for the fish oil.
b) The mixture is carried out while raising the temperature to over the 75°C, ensuring the correct dissolution and mixture of the products. When the temperature is reached, the fish flour and the fish oil are added, it is shaken for the time necessary to obtain total homogenization.
c) The product so obtained passes indiscriminately to a hopper for its casing or for rolling and cutting, or to an injector for its moulding into different figures.

2. Method for manufacturing natural bait for industrial and sports fishing, according to claim 1 **characterized in that** the hopper has two exit devices for the product which will be used indiscriminately, a first device introduces the product in collagen or cellulose casings giving it a cylindrical form and variable measurements in relation to length, by means of clipping, and thickness, once the casing is clipped, this is hung to cool down at room temperature; whilst the second device places the product on a conveyor belt, distributing the product uniformly over it and with a previously determined thickness, the belt passes the product through a cooling tunnel, achieving a solid and flexible plate. At the end of the belt, a stamping press cuts it in smaller plates and makes a premarking, in order to cut the strips easily that will be used later as bait.

3. Method for manufacturing natural bait for industrial and sports fishing, according to claims 1 and 2 **characterized in that** the Injector machine injects the product into moulds with different shapes: fish, roe, worms, cephalopods, crustaceans, mollusks, etc., once in the moulds, it is left to cool down at room temperature, to be taken out of its mould later.
